Europäisches Patentamt

European Patent Office

Office européen des brevets

(11) Numéro de publication: **0 512 148 A1**

# DEMANDE DE BREVET EUROPEEN

(21) Numéro de dépôt: **91107650.3**

(22) Date de dépôt: **10.05.91**

(51) Int. Cl.5: **B65D 81/34**

(43) Date de publication de la demande:
**11.11.92 Bulletin 92/46**

(84) Etats contractants désignés:
**AT BE CH DE DK ES FR GB GR IT LI LU NL SE**

(71) Demandeur: **SOCIETE DES PRODUITS NESTLE S.A.**
**Case postale 353**
**CH-1800 Vevey(CH)**

(72) Inventeur: **Fond, Olivier**
**3, rue de la Villette**
**CH-1400 Yverdon(CH)**

(54) Cartouche fermée pour la confection d'une boisson.

(57) L'invention concerne une cartouche fermée prévue pour être extraite sous pression, contenant une substance (3) pour la préparation d'une boisson, comprenant une coupelle (2) avec face supérieure et paroi latérale ayant sensiblement la forme d'un tronc de cône et une face inférieure (4) de diamètre supérieur à la face supérieure, dans laquelle la face inférieure est un opercule soudé sur le pourtour du rebord inférieur de la coupelle et est constitué d'une matière souple imperméable à l'oxygène, choisie dans le groupe constitué par l'aluminium, un composite aluminium/plastique, un composite aluminium/plastique/papier, du plastique pur ou multi-couches.

FIGURE 1

EP 0 512 148 A1

L'invention concerne une cartouche fermée, prévue pour être extraite sous pression, contenant une substance pour la préparation d'une boisson, comprenant une coupelle avec face supérieure et paroi latérale ayant sensiblement la forme d'un tronc de cône et une face inférieure de diamètre supérieur à la face supérieure.

L'utilisation de capsules pour la préparation d'une boisson, surtout dans le domaine des cafés type espresso extraits sous pression, est motivée par plusieurs raisons: hygiène, conservation optimale du café, facilité d'usage, meilleure maîtrise de la qualité du café obtenu et bonne reproductibilité des conditions d'extraction. Parmi l'ensemble des capsules disponibles, seules les capsules fermées, s'ouvrant sous l'effet de la pression d'eau injectée, répondent plus complètement aux arguments énoncés ci-dessus. Ces capsules se distinguent par leur système d'ouverture.

Celles faisant l'objet du brevet CH 605 293 présentent des zones affaiblies qui se déchirent préférentiellement sous l'effet de la pression. Cette solution présente le désavantage d'augmenter la complexité et le prix de la capsule car les matières employées doivent être traitées de manière très précise pour que l'ouverture soit correcte et reproductible.

La cartouche, objet de la présente invention, est d'un prix nettement plus faible et sa fabrication considérablement plus aisée, tout en permettant d'avoir une cartouche pour la confection d'une boisson, en particulier un café espresso, c'est-à-dire dans laquelle on effectue une extraction du café sous une pression comprise entre 1 et 15 bars.

L'invention concerne une cartouche fermée selon le préambule de la revendication 1, dans laquelle la face inférieure est un opercule soudé sur le pourtour du rebord inférieur de la coupelle et est constitué d'une matière souple imperméable à l'oxygène, choisie dans le groupe constitué par l'aluminium, un composite aluminium/plastique, un composite aluminium/plastique/papier, du plastique pur ou multi-couches. L'intérêt de cette cartouche est qu'elle ne comprend pas à proprement parler de filtre. La notion pour la cartouche selon l'invention de face supérieure et face inférieure sera explicitée davantage en référence aux figures.

La cartouche selon l'invention, peut être extraite selon le procédé et avec le dispositif faisant l'objet d'une demande de brevet européen déposée par la demanderesse, le même jour que la présente demande, sous le titre "Procédé d'extraction de cartouches fermées et dispositif pour sa mise en oeuvre". Le dispositif d'extraction, prévu dans cette demande de brevet, permet d'extraire dans de bonnes conditions cette capsule simplifiée. La capsule s'ouvre automatiquement dans le dispositif et après usage, peut être retirée facilement et intégralement sans aucun déchet de marc ou de matière d'emballage.

L'opercule est normalement soudé sur le pourtour de la coupelle. Le soudage se fait par thermosoudage, les parties à souder comportent sur leurs faces en regard une laque de soudage. On peut également replier le rebord inférieur de la coupelle sur l'opercule et réaliser ainsi un sertissage. Aussi bien avec le soudage seul que combiné avec le sertissage, on obtient une cartouche résistant à des pressions pouvant aller jusqu'à 15 bars.

La cartouche est remplie d'une substance pour la préparation d'une boisson. Cette substance est de préférence du café torréfié et moulu, mais peut être aussi du thé, du café soluble, un mélange de café moulu et de café soluble ou un produit chocolaté.

Le corps principal de la capsule, à savoir la coupelle, de forme tronconique et de nature semi-rigide, peut être constitué d'aluminium d'une épaisseur de 20 à 100 $\mu$m, de plastique pur ou multi-couches avec éventuellement une couche barrière à l'oxygène telle que l'EVOH ou le PVDC, d'un film multi-couches tel que carton, aluminium, plastique ou carton, plastique avec éventuellement une couche barrière à l'oxygène telle que l'EVOH ou le PVDC.

L'opercule de la capsule, de nature souple, peut être constitué d'aluminium d'une épaisseur de 15 à 60 $\mu$m, ou d'un film multi-couches comprenant, soit du papier de 20 à 60 g/m2, du plastique tel que le polyéthylène d'une épaisseur de 20 à 60 $\mu$m et de l'aluminium d'une épaisseur de 5 à 20 $\mu$m, soit de l'EVOH d'une épaisseur de 5 à 30 $\mu$m et du plastique (PP, PE) de 20 à 100 $\mu$m, soit du PET (5 à 30 $\mu$m) et du plastique (PP, PE) de 20 à 100 $\mu$m, soit du PET métallisé ou muni d'une couche haute barrière telle que SiO2.

Parmi ces matières, l'aluminium se déchire le plus facilement et le plus nettement en employant un film multi-couches, la présence des fibres de papier et l'étirement de la couche plastique permet de constituer un treillis à l'emplacement des déchirures, ce qui est favorable pour maintenir l'intégrité du fond de la capsule et empêcher la dispersion du marc tout en assurant une extraction homogène du lit de café.

Selon une autre configuration de la capsule, une couche de papier filtre ou de fibres non tissées à base de PET ou de PP peut être intercalée entre l'opercule et le corps de la capsule et soudée à ces deux éléments. Cette matière peut être d'une densité de 20 à 50 g/m2.

La cartouche selon l'invention peut être de taille variable suivant le volume de café que l'on souhaite préparer. La dose de café contenue peut varier entre 5 et 20 g, le diamètre de la cartouche est compris entre 2,5 et 6 cm et l'épaisseur du lit de café entre 10 et 25 mm.

La suite de la description est faite en référence aux dessins sur lesquels:

Fig. 1 est une représentation schématique de la cartouche selon l'invention;

Fig. 2 est une représentation schématique selon une seconde forme de réalisation et

Fig. 3 est une représentation schématique selon une troisième forme de réalisation.

La cartouche (1) comporte une coupelle (2) avec une face supérieure (5) et une paroi latérale de forme tronconique (6). La coupelle est en aluminium d'épaisseur 50 μm. La cartouche contient du café torréfié (3) et elle est fermée par un opercule (4) en composite aluminium/papier. Cet opercule est soudé sur le pourtour (7) du rebord inférieur de la coupelle.

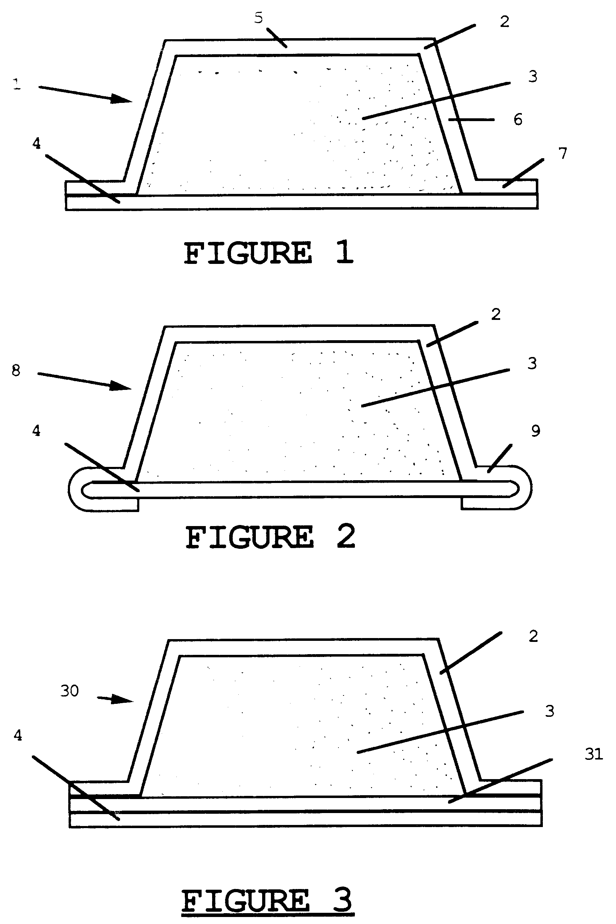

La cartouche (8) de la Fig. 2 comporte une coupelle (2) identique à celle de la Fig. 1, sauf que le rebord (9) de la coupelle est plus large permettant ainsi un rabattement, c'est-à-dire un sertissage sur le pourtour de l'opercule (4). Le matériau utilisé est le même que celui de la Fig. 1.

La cartouche (30) de la Fig. 3 comporte sur l'opercule (4) un papier filtre (31) soudé contre le pourtour dudit opercule et le pourtour de la coupelle (2).

La cartouche selon l'invention est de type s'ouvrant sous l'effet de la pression mais est de conception et de fabrication plus simple et plus économique que celle de la technique antérieure.

## Revendications

1. Cartouche fermée, prévue pour être extraite sous pression, contenant une substance pour la préparation d'une boisson, comprenant une coupelle avec face supérieure et paroi latérale ayant sensiblement la forme d'un tronc de cône et une face inférieure de diamètre supérieur à la face supérieure, caractérisée en ce que la face inférieure est un opercule soudé sur le pourtour du rebord inférieur de la coupelle et est constitué d'une matière souple imperméable à l'oxygène, choisie dans le groupe constitué par l'aluminium, un composite aluminium/plastique, un composite aluminium/ plastique/papier, du plastique pur ou multi-couches.

2. Cartouche selon la revendication 1, caractérisé en ce que l'opercule est serti sur le rebord inférieur de la coupelle.

3. Cartouche selon l'une des revendications 1 ou 2, caractérisée en ce que la coupelle est en un matériau choisi parmi l'aluminium ayant une épaisseur de 20 à 100 μm, un plastique pur ou multi-couches, un composite carton/aluminium/plastique et un composite carton/plastique.

4. Cartouche selon l'une des revendications 1 à 3, caractérisée en ce que l'opercule est en un matériau choisi parmi l'aluminium d'une épaisseur de 15 à 50 μm et un multi-couches comprenant, soit du papier de 20 à 60 g/m2, du plastique d'une épaisseur de 20 à 60 μm et de l'aluminium d'une épaisseur de 5 à 20 μm, soit de l'EVOH d'une épaisseur de 5 à 30 μm et du plastique (PP, PE ou PA) de 20 à 100 μm, soit du PET (5 à 30 μm) et du plastique (PP, PE) de 20 à 100 μm, soit du PET métallisé ou muni d'une couche haute barrière telle que SiO2.

5. Cartouche selon l'une des revendications 1 à 4, caractérisé en ce qu'elle a un diamètre compris entre 2,5 et 6 cm et une épaisseur comprise entre 10 et 25 mm.

FIGURE 1

FIGURE 2

FIGURE 3

Office européen
des brevets

**RAPPORT DE RECHERCHE EUROPEENNE**

Numero de la demande

EP    91 10 7650

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X,D | CH-A-605 293 (SOCIETE DES PRODUITS NESTLE S.A.)<br>* le document en entier *<br>--- | 1-4 | B65D81/34 |
| X | FR-A-2 211 924 (BATTELLE MEMORIAL INSTITUTE)<br>* le document en entier * | 1-2 | |
| A | ---  | 5 | |
| X | GB-A-938 617 (SEALPAK CORPORATION)<br>* page 2, ligne 4 - ligne 44; figure 3 *<br>--- | 1,3 | |
| A | US-A-2 778 739 (ROOTH)<br>* colonne 2, ligne 31 - ligne 66; figure 1 *<br>--- | 1,4 | |
| A | EP-A-0 272 922 (GENERAL FOODS LIMITED)<br>* colonne 2, ligne 14 - ligne 18 *<br>* colonne 2, ligne 26 - ligne 34 *<br>--- | 3-4 | |
| A | EP-A-0 389 141 (GENERAL FOODS LIMITED)<br>* colonne 3, ligne 6 - ligne 9 * | 4 | |

-----

| | | | DOMAINES TECHNIQUES RECHERCHES (Int. Cl.5 ) |
|---|---|---|---|
| | | | B65D |

Le présent rapport a été établi pour toutes les revendications

| Lieu de la recherche | Date d'achèvement de la recherche | Examinateur |
|---|---|---|
| LA HAYE | 22 JANVIER 1992 | BRIDAULT A.A.Y. |